# EUROPEAN PATENT APPLICATION

(11) **EP 2 785 067 A1**
(43) Date of publication of application: **01.10.2014**
(21) Application number: 13290072.1
(22) Date of filing: 27.03.2013
(51) Int. Cl.: H04N 21/2343, H04N 21/44

(54) **A method and client for requesting, receiving and decoding adaptive streaming video**

(71) Applicant: ALCATEL LUCENT, 92100 Boulogne-Billancourt (FR)
(72) Inventor: Wu, Tingyao, 3001 Leuven (BE); Lou, Zhe, 2640 Mortsel (BE)
(74) Representative: Plas, Axel Ivo Michel

(57) **Abstract**

In order to download a video item available in plural quality versions, the available bandwidth and the maximum buffer size of the play-out buffer (301) is estimated. In a buffering state (201, 221), the play-out buffer (301) is filled up to a first predetermined fill level (75 Mb) that approximates the maximum buffer size by requesting video segments in a first quality version whose corresponding first play-out bitrate is below the available bandwidth. In a steady state (202, 222), further video segments are requested in a second quality version with corresponding second play-out bitrate that is higher than the first play-out bitrate and possibly higher than the available bandwidth. As soon as the buffer fill level drops below a second predetermined fill level (15 Mb), further video segments are again requested in the first quality version to fill the play-out buffer (301) again up to the first predetermined fill level (75 Mb).

## Description

### Field of the Invention

The present invention generally relates to adaptive streaming of video segments, i.e. fixed size or variable size fragments of a video item with a typical length of a few seconds that can be delivered in different versions or quality levels depending on the available network and client resources. The invention in particular aims at improving the Quality-of-Experience (QoE) for clients with low available bandwidth by increasing the video quality while reducing the chances for buffer under-run through more effective use of available bandwidth.

### Background of the Invention

Video is increasingly delivered using adaptive streaming (AS) techniques, like for instance Hyper Text Transport Protocol (HTTP) adaptive streaming (HAS). HAS has the advantage that it is easily deployable since it traverses firewalls more easily than other protocols, has inherent congestion control inherited from TCP, and makes use of available HTTP infrastructure such as HTTP caching nodes and Content Distribution Network (CDN) nodes.

Using adaptive streaming, a video item, e.g. a video file or stream, is encoded and made available in different versions. The different versions represent different quality levels and different play-out bit rates. At specified points in time, the video client estimates the highest sustainable quality level based on its own measurements, and requests the video item in this highest sustainable quality level. The interval between two consecutive switching times is referred to as a video segment. The bit strings that correspond with that interval - it is noticed that there are as many bit strings as quality versions - are referred to as chunks. The video client in other words monitors the available bandwidth or network throughput, more particularly the throughput offered by the Transport Control Protocol (TCP) and tries to match the video bit rate for the next video segment to the available bandwidth by requesting to deliver that video segment with a particular quality. Because the requested bit rate cannot match the available bit rate exactly, the video client needs to maintain a play-out buffer to avoid play-out pauses or interrupts.

In case of HTTP adaptive streaming, each segment is made available through the HTTP server together with a manifest file describing the video item in terms of available quality levels and required segments for play-out. The video client initiates play-out by requesting the manifest file from the HTTP server. The video client thereafter starts downloading the video segments by sending an HTTP-GET request for each segment. The desired quality is specified for each video segment in the HTTP-GET request. The video client thereto incorporates a client heuristic that decides autonomously on the quality level of each requested video segment. The quality selection by the client heuristic is based on the monitored available bandwidth as mentioned here above, but may also account for other parameters like the client terminal specifications, e.g. the display size, supported decoders and processing power of the client device, and additional information related to the on-going session such as the filling level of the buffer at the client, etc.

In existing HAS implementations, the client heuristic typically distinguishes between two states: the buffering state and the steady state. In the buffering state, the client tries to fill its play-out buffer as quickly as possible up to a certain time threshold. This time threshold is typically 20 to 30 seconds in existing implementations like Adobe Dynamic Streaming, Apple HTTP Adaptive Streaming and Microsoft Smooth Streaming. The client is in the buffering state at the beginning of watching a video item and each time the user jumps to a new position in the video item. The play-out buffer is then first evacuated by discarding the video segments that are still present in the buffer. Thereafter, the client enters the buffering state to fill the buffer up to the time threshold with video segments starting from the jump position. In the steady state, the client is playing the buffered segments of the video item while the user is watching. While doing so, the client generates additional requests for additional video segments that are queued in the play-out buffer before being played. The client attempts to synchronize retrieval of new video segments with playback of buffered video segments. For instance, an HTTP-GET request is sent every 2 seconds in a system with segment length equal to 2 seconds. This way, the buffer fill level remains substantially constant, close to the time threshold that is set to switch from the buffer state to the steady state.

A drawback of existing HAS implementations is that the sustainable best quality level as determined by the client is usually conservative and does fully exploit the available bandwidth. Part of the available bandwidth in other words is wasted. If for instance the available quality levels for a HAS based video item are 300 kbps, 427 kbps, 608 kbps, 866 kbps, 1233 kbps, 1636 kbps and 2436 kbps, and the perceived available bandwidth is 1500 kbps, the client's heuristic would most likely choose to request the quality level corresponding to 1233 kbps play-out bit rate, assuming that the client terminal specifications support that quality level, Although the client heuristic well protects the client against picture freeze, its choice leads to a permanent waste of bandwidth equal to 1500 kbps - 1233 kbps = 267 kbps. This calculation assumes that the client issues one HTTP-GET request per time slot corresponding to the length of a video segment, e.g. every 2 seconds in a system wherein the length of video segments is 2 seconds.

Another drawback of existing HAS implementations is that clients with low available bandwidth have little chance to watch video segments in high quality. Despite the fact that part of the available bandwidth is left unused, no higher quality segments are requested because the delivery of higher quality segments is supposed to involve risk for buffer under-run leading to picture freeze, which is unacceptable for the user. The client heuristic of a client with an estimated available bandwidth of 400 kbps shall for instance decide to request video segments with a quality level that corresponds with a play-out bit rate of 300 kbps. In the buffering state where the client exploits the 400 kbps available bandwidth to fill its play-out buffer as quickly as possible up to a time threshold of 32 seconds, the client will reach the steady state after about 96 seconds downloading. In the steady state, the client will reduce the pace of requests to one request per 2 seconds, assuming again that the video segment length is 2 seconds. In the steady state, 25 % of the 400 kbps available bandwidth will remain unused. The client's buffer fill level will stay around 9.6 Mb (i.e. 300 kbps x 32 s) whereas the total capacity of the buffer is 2436 kbps x 32 s = 77.952 Mb. Indeed, the total buffer capacity expressed in Mb may be assumed to correspond with the buffer fill capacity expressed in seconds multiplied with the bitrate of the highest quality level that is supported, expressed in Mbps or kbps. Despite the fact that 25 % of the available bandwidth capacity is left unused and 88 % of the available buffer capacity is left unused, the user is not offered a better quality than the lowest video quality level.

It is an objective of the present invention to disclose a method for adaptive streaming of video items and a corresponding adaptive streaming aware video client that overcomes the above mentioned drawbacks of existing solutions. More particularly, it is an objective to reduce the waste of available bandwidth and increase the Quality-at-Experience for clients with low perceived bandwidth. It is a further objective of the present invention to disclose such method and client for adaptive streaming of video wherein the risk for play-out buffer under-run is further reduced.

### Summary of the Invention

According to the present invention, the above-identified objectives are realized by the method for requesting, receiving and decoding video segments of a video item, the video item being available in plural quality versions, each quality version having a respective corresponding play-out bitrate, the method being defined by claim 1, comprising:
- estimating available bandwidth for receiving the video segments of the video item;
- receiving information indicative for available quality versions of the video item;
- estimating the maximum buffer size of a play-out buffer that will be used to temporarily store the video segments of the video item;
- in a buffering state, filling the play-out buffer up to a first predetermined fill level that approximates the maximum buffer size by requesting video segments of the video item in a first quality version whose corresponding first play-out bitrate is below the available bandwidth estimated;
- in a steady state wherein video segments of the video item stored in the playout buffer are decoded for play-out, requesting further video segments of the video item in a second quality version with a corresponding second play-out bitrate that is higher than the first play-out bitrate and possibly higher than the available bandwidth estimated; and
- as soon as the buffer fill level of the play-out buffer drops below a second predetermined fill level, requesting further video segments of the video item again in the first quality version in order to fill the play-out buffer again up to the first predetermined fill level.

Thus, the invention resides in installing a predetermined first fill level that approximates the actual maximum buffer size as a threshold to transit from the buffering state to the steady state, instead of the temporal threshold that is used in existing implementations of HAS. This way, the adaptive streaming client makes use of the available buffer size also in situations where the requested quality level is low and the traditional temporal limit of e.g. 32 seconds would be satisfied with a rather small fraction of the play-out buffer being filled. In addition, the present invention in the steady state takes advantage of the abundant perceived bandwidth and the knowledge that the play-out buffer is filled approximately up to its maximum buffer size in order to allow the client to temporarily experience a higher video quality. Until the buffer fill level has dropped below a second predetermined threshold, the user will experience a better video quality that may even correspond with a video play-out rate that exceeds the estimated available bandwidth on the incoming link towards the client. In summary, the invention makes full use of the clients' resources, i.e. the available bandwidth and buffer capacity, enabling the client heuristic to temporarily request higher quality video segments without risk for buffer under-run and picture freeze. In particular for clients with a low perceived available bandwidth, this will substantially increase the Quality-of Experience.

It is noticed that as a result of the present invention, the video quality shall change from time to time. Each time the first predetermined buffer fill level is reached, the client starts to request video segments at a higher quality. Each time buffer fill level drops below the second predetermined buffer fill level, the client again requests video segments at the lower quality sustainable in view of the estimated available bandwidth. The quality change however will last for a rather long period, e.g. a few hundreds of seconds, as a result of which the quality changes introduced by the present invention cannot be seen as disturbing quality oscillations that would rather negatively impact the viewer's Quality-of-Experience.

In a preferred embodiment of the method for requesting, receiving and decoding video segments of a video item according to the present invention, defined by claim 2, the maximum buffer size is estimated by multiplying the buffer length expressed in seconds with the play-out bitrate corresponding with the highest quality version supported.

Indeed, one way to approximate the maximum buffer size could be based on the assumption that the buffer, whose maximum temporal length is expressed in seconds, is filled with the highest quality video segments. In case the buffer length is for instance 32 seconds and the highest quality level corresponds with a play-out bitrate of 2400 kbps, the maximum buffer size approximates 75 Mbytes. As a result, the first predetermined buffer level that serves as threshold for the transition from buffering state to steady state could be selected equal to or slightly below 75 Mbytes.

Following an optional aspect of the method for requesting, receiving and decoding video segments of a video item according to the present invention, defined by claim 3, the information indicative for available quality versions of the video item is extracted from a manifest file describing available quality levels of the video item.

Thus, the information indicative for the available qualities of the video item that is required in the current invention to enable the client heuristic to select which quality level will be requested, can be extracted from the manifest file that is transferred between the adaptive streaming server and adaptive streaming client at the start of an adaptive streaming sessions.

In addition to a method as defined by claims 1-3, the present invention also concerns a corresponding data processing system, defined by claim 4, comprising means for carrying out the method of any of claims 1 to 3.

The present invention further also concerns a computer program as defined by claim 5, comprising software code adapted to perform the method of any of claims 1 to 3, and a computer readable storage medium as defined by claim 6, comprising the computer program of claim 5.

Furthermore, as defined by claim 7, the present invention relates to a corresponding adaptive streaming aware client able to request, receive and decode video segments of a video item, the video item being available in plural quality versions, each quality version having a respective corresponding play-out bitrate, the adaptive streaming aware client comprising:
- estimating logic adapted to estimate available bandwidth for receiving the video segments of said video item;
- a receiver adapted to receive information indicative for available quality versions of the video item;
- a play-out buffer;
- estimating logic adapted to estimate the maximum buffer size of the play-out buffer that will be used to temporarily store the video segments of the video item;
- a segment request generator configured to request video segments of the video item in a first quality version whose corresponding first play-out bitrate is below the available bandwidth estimated, in order to fill in a buffering state the play-out buffer up to a first predetermined fill level that approximates the maximum buffer size;
- wherein the segment request generator is further configured to request further video segments of the video item in a second quality version with a corresponding second play-out bitrate that is higher than the first play-out bitrate and possibly higher than the available bandwidth estimated, in a steady state wherein video segments of the video item stored in the play-out buffer are decoded for play-out; and
- wherein the segment request generator is further configured to request further video segments of the video item again in the first quality version as soon as the buffer fill level of the play-out buffer drops below a second predetermined fill level, in order to fill the play-out buffer again up to the first predetermined fill level.

### Brief Description of the Drawings

Fig. 1A and Fig. 1B illustrate the behaviour of adaptive streaming according to the prior art;

Fig. 2A, Fig. 2B and Fig. 2C illustrate the behaviour of adaptive streaming in an embodiment of the method according to the present invention; and

Fig. 3 is a functional block scheme of an embodiment of the adaptive streaming aware client according to the present invention.

### Detailed Description of Embodiment(s)

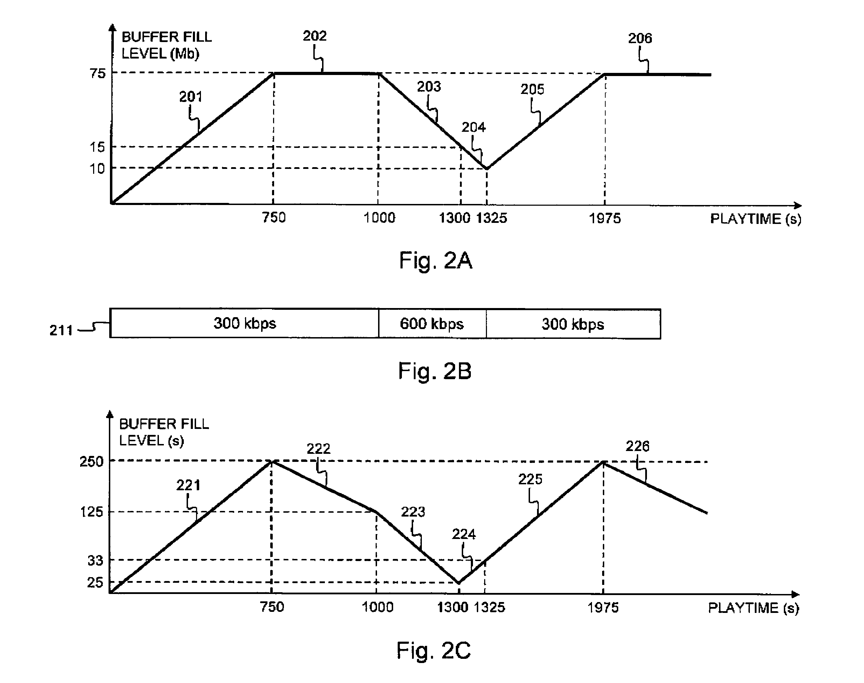

Fig. 2A, Fig. 2B and Fig. 2C illustrate the behaviour of adaptive streaming in an embodiment of the invention. More particularly, Fig. 2A shows the evolution in time of the fill level of the playout buffer, expressed in Mb or Megabytes, Fig. 2B shows the evolution in time of the playback quality of the video, i.e, the quality that is experienced by the viewer, and Fig. 2C shows the evolution in time of the fill level of the playout buffer, expressed in seconds playout time. In the illustrated scenario, it is assumed that the available quality versions for the video item that will be downloaded are 300 kbps, 427 kbps, 608 kbps, 866 kbps, 1233 kbps, 1636 kbps and 2436 kbps. These available quality versions are listed or described in the manifest file accompanying the video item. It is further assumed that the perceived bandwidth is 400 kbps and remains constant over time.

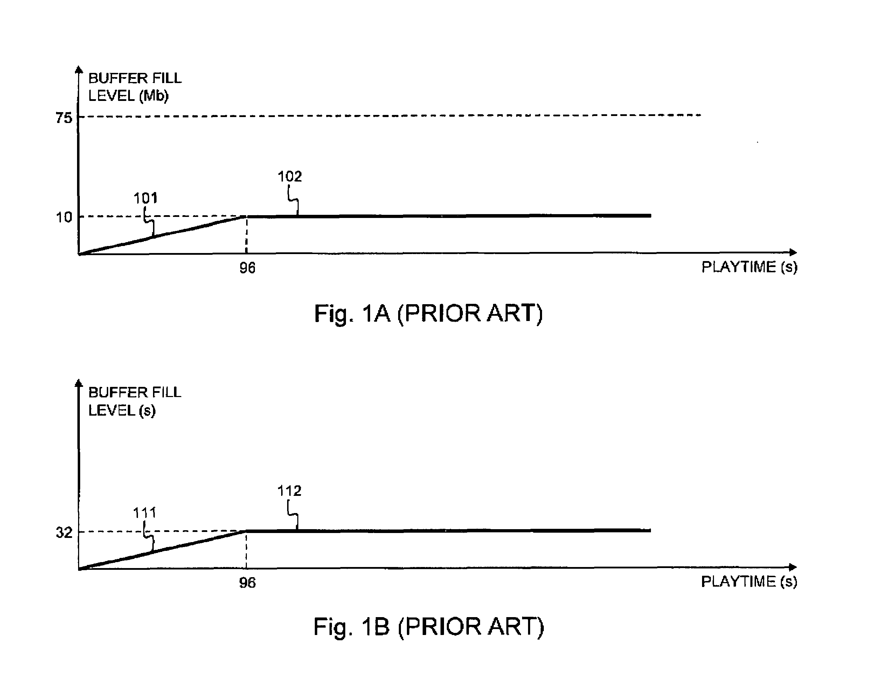

In the above scenario, a prior art video client heuristic would stick to request video segments with a 300 kbps quality during the whole playback. Indeed, in such prior art heuristic, the steady state is measured in terms of the temporal length in the buffer, regardless of the quality versions that have been buffered. This actually prevents the client from making full use of the network, e.g. pursuing a better quality. In Fig. 1A and Fig. 1B, it is for instance assumed that the client has a 32 seconds temporal buffer length. As a result of the perceived bandwidth of 400 kbps, the heuristic requests the 300 kbps quality segments aggressively in the buffering state illustrated by 101 in Fig. 1A and 111 in Fig. 1B. After about 96 seconds, the buffer fill level is close to 32 seconds because the playback speed is 300 kpbs whereas the download speed is 400 kpbs. As a consequence, the heuristic enters the steady state, wherein it continues to send requests for additional segments with 300 kbps quality every 2 seconds. As shown by 102 in Fig. 1A and 112 in Fig. 1B, the buffer fill level expressed in Mb and the buffer fill level expressed in seconds playout time remain constant. The buffer fill level expressed in Mb however stays far below the maximum available buffer capacity of 75 Mb, and the experienced video quality stays at 300 kbps level for the whole period although the available bandwidth for downloading equals 400 kbps and consequently remains partially unused.

In the following paragraphs, with reference to Fig. 2A, Fig. 2B and Fig. 2C, it is demonstrated how the situation changes with the new invention and how the client experiences a better video quality at a certain point for a sustainable period. In comparison with existing prior art heuristics, that try to fill the maximum buffer length in seconds, the present invention attempts to fill in the maximum buffer size in bytes. The maximum buffer size is thereto estimated by the client by multiplying the buffer length in seconds with the highest quality version supported in kbps. For instance, the maximum buffer capacity may be estimated at 75 MB in case the maximum buffer length is 32 seconds and the highest quality supported is 2400 kbps.

As mentioned above, the graph depicted in Fig. 2A illustrates how the buffer fill level, expressed in Megabytes or Mb, changes in time. The graph in Fig. 2C on the other hand shows how the buffer fill level, expressed in seconds playtime, changes in time. Fig. 2B indicates which quality version is played by the client in time. The process can be divided into 5 steps, respectively denoted 201, 202, 203, 204 and 205 in Fig. 2A, and denoted 221, 222, 223, 224 and 225 in Fig. 2C.

In the first phase that corresponds with 201 in Fig. 2A and 221 in Fig. 2C, the client requests segments with 300 kbps quality and consumes segments with 300 kbps quality. The client requests the highest quality version that is sustainable according to the estimated available bandwidth. This is the 300 kbps quality version. With a 400 kbps estimated available bandwidth, the client may be expected to receive new segments at 400 kbps, whereas the consumed segments are decoded and played back at 300 kbps. The buffer filling speed in the first phase consequently shall approximate 100 kbps. The client shall stay in this buffering state until the buffer fill level reaches the maximum buffer size, in this case 75 Mb. After 750 seconds, the maximum buffer fill level of 75 Mb is reached. Since the buffered segments all have the 300 kbps quality, this corresponds with a 250 seconds playback time. The client now enters the steady state.

In the second phase that corresponds with 202 in Fig. 2A and 222 in Fig. 2C, the client requests segments with 600 kbps quality, and consumes segments with 300 kbps quality. Without being afraid of picture freeze, the client can increase the requested quality. If it is supposed that the bit rate of the available high quality version is 600 kbps (≈ 608 kbps, to simplify the calculation) whereas the perceived available bandwidth is supposed to stay 400 kbps, the time for downloading one 600 kbps quality video segment of about 1.2 Mb is 2 x 600 kb / 400 kbps = 3 seconds. Within this period, the client still decodes and consumes 300 kbps segments that are buffered as a result of which the consumed volume is 3 seconds x 300 kbps = 0.9 Mb. Thus, at the start of this second phase, the client has to wait a bit until the playback consumption makes room in the buffer to store a high quality segment. As is indicated by 202, the buffer fill level approximately stays at its maximum size, whereas the buffered temporal length in seconds playback time decreases as is indicated by 222. Retrieving a 2 seconds long 600 kbps quality video segment takes 3 seconds. The second phase lasts for 250 seconds until all buffered 300 kbps quality segments are consumed. From that point onwards, all segments in the buffer have a 600 kbps quality. With 75 Mb stored in the buffer, the buffer length expressed in seconds playtime has decreased to 125 seconds.

In the third phase that corresponds with 203 in Fig. 2A and 223 in Fig. 2C, the client requests segments with 600 kbps quality, and consumes segments stored in the buffer with 600 kbps quality. In this phase, the time for downloading a segment takes 3 seconds, i.e. 2 s x 600 kbps / 400 kbps, whereas the playback time for consuming such a quality segment is 2 seconds. As a consequence the buffer fill level is decreasing at a speed of 200 kbps and the buffer temporal length is also decreasing. In order to prevent the client from buffer under-run and picture freezing, the present invention implements a second threshold. In the embodiment illustrated by Fig. 2A, Fig. 2B and Fig. 2C, this second threshold is set at 15 Mb which corresponds to 25 seconds playtime of 600 kbps quality segments stored in the buffer. This second threshold will be reached after 300 seconds in the third phase.

In the fourth phase that corresponds with 204 in Fig. 2A and 224 in Fig. 2C, the client again requests segments with 300 kbps quality, and consumes segments stored in the buffer with 600 kbps quality. The client starts to request the 300 kbps quality segments again as soon as the second threshold is reached, but at the same time continues to consume the rest 25 seconds of stored 600 kbps quality segments. The fourth phase lasts 25 seconds. At the end of this phase, the buffer fill level has further decreased to 10 Mb in size but the temporal length of the buffer has increased again to 33 seconds thanks to the low quality 300 kbps segments that are now downloaded. As a result of the third and fourth phase, the customer has been watching better quality video segments for 325 seconds. This is indicated by 211 in Fig. 28 which shows the playback quality over time.

In the fifth phase that corresponds with 205 in Fig. 2A and 225 in Fig. 2C, the client continues to request segments with 300 kbps quality, while it consumes segments with 300 kbps quality. Just like in the first phase, the client keeps requesting the 300 kbps quality segments and consuming the 300 kbps quality segments until the first threshold of 75 Mb buffer fill level is reached. At the time of 1975 seconds, this maximum, buffer fill level of 75 MB is reached, and then the sixth phase denoted 206 in Fig. 2A and 226 in Fig. 2C is entered. This phase again corresponds with the second phase described above.

As is illustrated with the embodiment of Fig. 2A, Fig. 2B and Fig. 2C, the customer could watch segments with a higher quality, i.e. segments of a 608 kbps quality version instead of segments of a 300 kbps quality version, for a relatively long sustainable time. In the example given, a 325 second period for high quality segments and a 1000 seconds period for low quality segments are repetitively following each other. Such changing between rather long periods of low quality segments and high quality segments is not perceived as oscillation by the viewer. Further, the invention brings the advantage that full use is made of the perceived 400 kbps bandwidth, increasing the overall quality of experience for the user.

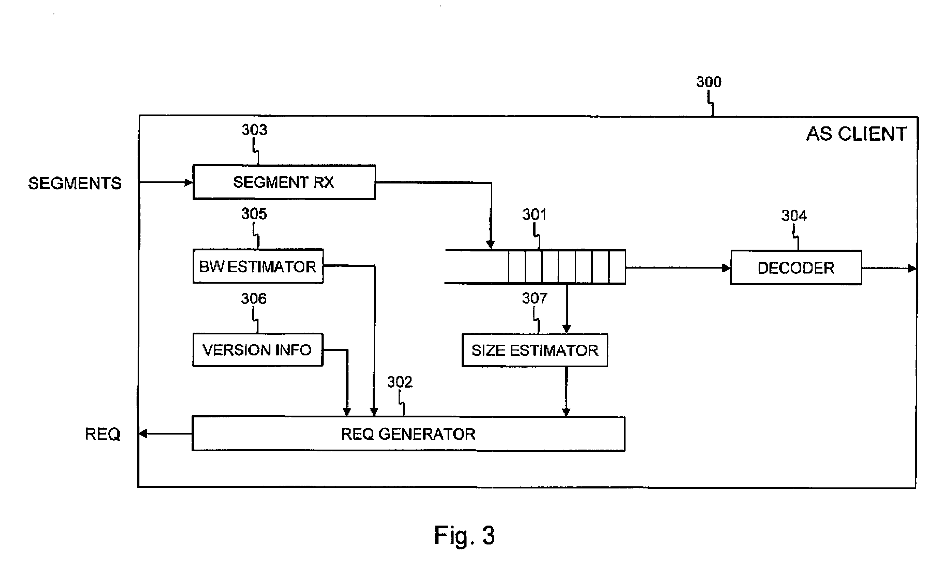

Fig. 3 shows the functional blocks of an embodiment of the adaptive streaming aware client, AS CLIENT or 300, according to the present invention. The AS client 300 comprises a playout buffer 301 wherein segments of a video item are temporarily buffered for playback. These segments, SEGMENTS, are received by the video segment receiver, SEGMENT RX or 303, that forms part of the AS client 300 after being requested by the request generator, REQ GENERATOR or 302. For each video segment, the request generator 302 generates and transmits a request REQ that also specifies the version or quality level wherein the video segment must be delivered. In order to be able to produce the requests REQ, the request generator 302 receives information specifying the available versions of the video item from a unit named VERSION INFO or 306 that inspects the manifest file accompanying the video item. In addition, the AS video client 300 comprises a bandwidth estimator, BW ESTIMATOR or 305, that estimates the available bandwidth for downloading video segments and informs the request generator 302 on the available bandwidth in order to enable the request generator 302 and more particularly the heuristic therein to take this information into account when deciding on the quality level that will be requested. The bandwidth estimator 305 may estimate the bandwidth once at start-up of the download of the video item, but preferably shall update the available bandwidth estimation at regular or arbitrary times during the download. The AS client 300 further comprises a size estimator, SIZE ESTIMATOR or 307, that estimates the maximum capacity of the playout buffer 301 in Mb, e.g. by multiplying the temporal playout length of this buffer 301 with the highest quality level supported by the AS client 300. The so estimated maximum buffer fill level in MB is also reported to the request generator 302 wherein the client heuristic that decides on the requested quality level for download takes this information into account in line with the principles of the present invention described in detail above.

It is noticed that the method according to the invention shall typically be computer-implemented on a data processing system or computing device. A data processing system or computing device that is operated according to the present invention can include a workstation, a server, a laptop, a desktop, a hand-held device, a mobile device, a tablet computer, or other computing device, as would be understood by those of skill in the art.

The data processing system or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system or computing device can include or interact with a variety of computer-readable media. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system or computing device.

The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system or computing device can include one or more processors that read data from components such as the memory, the various I/O components, etc.

The I/O ports can allow the data processing system or computing device to be logically coupled to other devices; such as I/O components. Some of the I/O components can be built into the computing device. Examples of such I/O components include a microphone, joystick, recording device, game pad, satellite dish, scanner, printer, wireless device, networking device, or the like.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for requesting, receiving and decoding video segments (SEGMENTS) of a video item, said video item being available in plural quality versions, each quality version having a respective corresponding play-out bitrate, said method comprising:
- estimating available bandwidth for receiving said video segments of said video item;
- receiving information indicative for available quality versions of said video item;
- estimating the maximum buffer size of a play-out buffer (301) that will be used to temporarily store said video segments of said video item;
- in a buffering state (201, 221), filling said play-out buffer (301) up to a first predetermined fill level (75 Mb) that approximates said maximum buffer size by requesting video segments of said video item in a first quality version whose corresponding first play-aut bitrate is below said available bandwidth estimated;
- in a steady state (202, 222) wherein video segments of said video item stored in said play-out buffer (301) are decoded for play-out, requesting further video segments of said video item in a second quality version with a corresponding second play-out bitrate that is higher than said first play-out bitrate and possibly higher than said available bandwidth estimated; and
- as soon as the buffer fill level of said play-out buffer (301) drops below a second predetermined fill level (15 Mb), requesting further video segments of said video item again in said first quality version in order to fill said play-out buffer (301) again up to said first predetermined fill level (75 Mb).

2. A method for requesting, receiving and decoding video segments of a video item according to claim 1,
wherein said maximum buffer size is estimated by multiplying the buffer length expressed in seconds with the play-out bitrate corresponding with the highest quality version supported.

3. A method for requesting, receiving and decoding video segments of a video item according to claim 1,
wherein said information indicative for available quality versions of said video item is extracted from a manifest file describing available quality levels of said video item.

4. A data processing system comprising means for carrying out the method of any of claims 1 to 3.

5. A computer program comprising software code adapted to perform the method of any of claims 1 to 3.

6. A computer readable storage medium comprising the computer program of claim 5.

7. An adaptive streaming aware client (300) able to request, receive and decode video segments (SEGMENTS) of a video item, said video item being available in plural quality versions, each quality version having a respective corresponding play-out bitrate, said adaptive streaming aware client (300) comprising:
- estimating logic (305) adapted to estimate available bandwidth for receiving said video segments of said video item;
- a receiver (306) adapted to receive information indicative for available quality versions of said video item;
- a play-out buffer (301);
- estimating logic (307) adapted to estimate the maximum buffer size of said play-out buffer that will be used to temporarily store said video segments of said video item;
- a segment request generator (302) configured to request video segments of said video item in a first quality version whose corresponding first play-out bitrate is below said available bandwidth estimated, in order to fill in a buffering state (201, 221) said play-out buffer (301) up to a first predetermined fill level (75 Mb) that approximates said maximum buffer size;
- wherein said segment request generator (302) is further configured to request further video segments of said video item in a second quality version with a corresponding second play-out bitrate that is higher than said first play-out bitrate and possibly higher than said available bandwidth estimated, in a steady state (202, 222) wherein video segments of said video item stored in said play-out buffer (301) are decoded for play-out; and
- wherein said segment request generator (302) is further configured to request further video segments of said video item again in said first quality version as soon as the buffer fill level of said play-out buffer (301) drops below a second predetermined fill level (15 Mb), in order to fill said play-out buffer (301) again up to said first predetermined fill level (75 Mb).
